# NEUE EUROPÄISCHE PATENTSCHRIFT

(11) **EP 3 216 992 B2**
(45) Veröffentlichungstag und Bekanntmachung des Hinweises auf die Entscheidung über den Einspruch: **08.04.2026**
(45) Hinweis auf die Patenterteilung: 31.10.2018
(21) Anmeldenummer: 17159284.3
(22) Anmeldetag: 06.03.2017
(51) Int. Cl.: F01N 3/021, F01N 3/10, F01N 3/20, F01N 3/28, F01N 13/18, B01F 3/04, B01F 5/00, B01F 5/04, B01F 5/06

(54) **MISCHER**
MIXER
MÉLANGEUR

(30) Priorität: 10.03.2016 DE 102016104361
(43) Veröffentlichungstag der Anmeldung: 13.09.2017
(73) Patentinhaber: Purem GmbH, 66539 Neunkirchen (DE)
(72) Erfinder: Solipuram, Vijaya Bhaskar, 73730 Esslingen (DE); Vempati, Krishna Kumar, 73730 Esslingen (DE); Kurpejovic, Enver, 73230 Kirchheim/Teck (DE)
(74) Vertreter: Ruttensperger Lachnit Trossin Gomoll

(56) Entgegenhaltungen:
- WO-A1-2012/080585
- WO-A1-2015/187128
- DE-A1- 102013 223 033
- DE-T5- 112010 002 589
- FR-A1- 2 966 197
- FR-A1- 3 020 835
- US-A1- 2014 196 441
- US-A1- 2015 110 681

## Beschreibung

Die vorliegende Erfindung betrifft einen Mischer zur Durchmischung von in einem Abgaskanal einer Brennkraftmaschine strömenden Abgas mit in den Abgaskanal eingespritztem Reaktionsmittel gemäß dem Oberbegriff des Anspruchs 1.

Um in Fahrzeugen mit Dieselantrieb den Schadstoffausstoß zu mindern, wird dem in einem Abgasführungskanal einer Abgasanlage strömenden Abgas ein Reaktionsmittel, beispielsweise eine Harnstoff/Wasser-Lösung, beigemischt. Um eine gute Durchmischung des durch eine Reaktionsmitteleinspritzanordnung, allgemein auch als Injektor bezeichnet, eingespritzten Reaktionsmittels mit dem Abgas zu erlangen, ist es bekannt, im Abgasführungskanal stromabwärts des Einspritzortes einen Mischer anzuordnen, welcher im Allgemeinen eine Mehrzahl von zur Abgasströmungsrichtung geneigt angeordneten Ablenkflächen aufweist, das Abgas und das Reaktionsmittel treffen auf diese Ablenkflächen auf und werden dort umgelenkt, so dass durch die dabei entstehende Verwirbelung eine verbesserte Vermischung erreicht wird. Gleichzeitig unterstützen die durch das Abgas erwärmten Ablenkflächen eines derartigen Mischers die Erwärmung und die Verdampfung des darauf auftreffenden, in Tröpfchenform in das Abgas eingespritzten Reaktionsmittels.

Ein Mischer gemäß dem Oberbegriff des Anspruchs 1 ist aus der DE 10 2013 223 033 A1 bekannt. Dieser Mischer umfasst drei in einem rohrartigen Gehäuse in Abgasströmungsrichtung aufeinanderfolgend mit Abstand zueinander angeordnete plattenartige Mischerkörperteile. In einem Bereich zwischen dem am weitesten stromaufwärts positionierten Mischerkörperteil und dem mittleren Mischerkörperteil ist ein Injektor zur Abgabe von Reaktionsmittel im Wesentlichen in den zwischen diesen beiden Mischerkörperteilen gebildeten Raumbereich vorgesehen. Das Reaktionsmittel und das in diesen Raumbereich durch Öffnungen im am weitesten stromaufwärts positionierten Mischerkörperteil einströmende Abgas strömen durch Öffnungen im mittleren Mischerkörperteil in einen zwischen diesem und dem am weitesten stromabwärts positionierten Mischerkörperteil gebildeten Raumbereich.

Aus der WO 2015/187128 A1 ist ein Mischer bekannt, bei welchem in einem Abgasströmungsweg eine bereichsweise gewölbt ausgebildete Ablenkplatte mit einer Mehrzahl von Durchtrittsöffnungen für das Abgas vorgesehen ist.

Die FR 2 966 197 A1 offenbart einen Mischer für eine Abgasanlage, bei welchem zwischen zwei plattenartigen Mischerkörperteilen ein ringartiger Strömungsraum gebildet ist. Durch Öffnungen in dem stromaufwärts positionierten Mischerkörperteil tritt Abgas in den ringartigen Strömungsraum ein. In einem Umfangsbereich des ringartigen Strömungsraums wird Reaktionsmittel in diesen eingespritzt. In einem anderen Umfangsbereich verlässt das Gemisch aus Abgas und Reaktionsmittel den Strömungsraum.

Die US 2014/0196441 A1 offenbart eine Mischeinrichtung für eine Abgasanlage, bei welcher ein Injektor Reaktionsmittel in einen von einer im Wesentlichen zylindrischen Wandung mit einer Vielzahl von darin ausgebildeten Öffnungen umgrenzten Raumbereich eingespritzt.

Es ist die Aufgabe der vorliegenden Erfindung, einen Mischer zur Durchmischung von in einem Abgaskanal einer Brennkraftmaschine strömendem Abgas mit in den Abgaskanal eingespritztem Reaktionsmittel vorzusehen, welcher eine effizientere Durchmischung des Reaktionsmittels mit dem Abgas herbeiführt.

Erfindungsgemäß wird diese Aufgabe gelöst durch einen Mischer zur Durchmischung von in einem Abgasführungskanal einer Brennkraftmaschine strömendem Abgas mit in den Abgasführungskanal eingespritztem Reaktionsmittel gemäß Anspruch 1. Dieser Mischer umfasst einen Mischerkörper mit
- einem Reaktionsmittelaufnahmekanal,
- einer Abgaseintrittsöffnungsanordnung mit einer Mehrzahl von zu dem Reaktionsmittelaufnahmekanal führenden Abgaseintrittsöffnungen,
- wenigstens einem von dem Reaktionsmittelaufnahmekanal wegführenden Abgabekanal mit einer Abgabekanalöffnung zur Abgabe eines Reaktionsmittel/Abgas-Gemisches aus dem Mischerkörper.

Der erfindungsgemäß aufgebaute Mischer weist in dem Mischerkörper, bereitgestellt durch den Reaktionsmittelaufnahmekanal und den wenigstens einen von diesem weg führenden Abgabekanal, einen Innenvolumenbereich auf, in welchen einerseits das Reaktionsmitteleingespritzt wird, nämlich in den Reaktionsmittelaufnahmekanal, und in welchen andererseits über die Abgaseintrittsöffnungsanordnung das in einem Abgasführungskanal einer Abgasanlage strömende Abgas eintritt. Sowohl beim Eintritt in den als auch beim Strömen durch den Reaktionsmittelaufnahmekanal und den wenigstens einen Abgabekanal wird die Strömungsrichtung des Abgases mehrfach umgelenkt, so dass durch diese Strömungsumlenkung beim Durchströmen des Reaktionsmittelaufnahmekanals und des wenigstens einen Abgabekanals eine effiziente Durchmischung des Reaktionsmittels mit dem Abgas erzwungen wird.

Um dabei eine möglichst gleichmäßige Abgabe des in dem Mischerkörper generierten Gemisches aus Reaktionsmittel und Abgas in den stromabwärts folgenden Teil eines Abgasführungskanals zu erreichen, führen von dem Reaktionsmittelaufnahmekanal zwei Abgabekanäle in im Wesentlichen entgegengesetzten Richtungen weg.

Der Reaktionsmittelaufnahmekanal weist einen Reaktionsmittelaufnahmeendbereich auf, in welchen das durch eine Reaktionsmitteleinspritzanordnung abgegebene Reaktionsmittel eingespritzt werden kann. Das Reaktionsmittel strömt im Reaktionsmittelaufnahmekanal auf einen Abgabeendbereich desselben zu. Von diesem Abgabeendbereich des Reaktionsmittelaufnahmekanals führen die beiden Abgabekanäle weg.

Um im Übergang von dem Reaktionsmittelaufnahmekanal zu dem wenigstens einen Abgabekanal durch Strömungsumlenkung für eine effiziente Durchmischung sorgen zu können, ist im Abgabeendbereich ein Strömungsumlenkbereich zum Umlenken von im Reaktionsmittelaufnahmekanal auf den Abgabeendbereich zu strömendem Reaktionsmittel oder/und Abgas in jeden Abgabekanal vorgesehen. Da der Strömungsumlenkbereich im Wesentlichen zwischen den beiden Abgabekanälen angeordnet ist, können diese einerseits strömungstechnisch voneinander entkoppelt werden, andererseits kann der Strömungsumlenkbereich zur Strömungsumlenkung in Zuordnung zu beiden Abgabekanälen genutzt werden.

Um neben dem Austritt des Gemisches aus Reaktionsmittel und Abgas im Bereich der Abgabeöffnung des wenigstens einen Abgabekanals auch an anderen Orten einen Austritt dieses Gemisches aus dem Innenvolumenbereich des Mischerkörpers zu ermöglichen, wird vorgeschlagen, dass eine Austrittsöffnungsanordnung mit einer Mehrzahl von aus dem Reaktionsmittelaufnahmekanal oder/und dem wenigstens einen Abgabekanal herausführenden Austrittsöffnungen vorgesehen ist. Dabei kann beispielsweise vorgesehen sein, dass im Übergangsbereich von dem Reaktionsmittelaufnahmekanal zu einem der Abgabekanäle eine erste Gruppe von Austrittsöffnungen vorgesehen ist und im Übergangsbereich von dem Reaktionsmittelaufnahmekanal zu dem anderen der Abgabekanäle eine zweite Gruppe von Austrittsöffnungen vorgesehen ist.

Um auch den Eintritt von Abgas in den Innenraum des Mischerkörpers an mehreren Positionen zu ermöglichen, wird vorgeschlagen, die Abgaseintrittsöffnungsanordnung in einem den Reaktionsmittelaufnahmekanal begrenzenden ersten Wandungsbereich des Mischerkörpers eine erste Gruppe mit wenigstens einer ersten Abgaseintrittsöffnung und in einem den Reaktionsmittelaufnahmekanal begrenzenden zweiten Wandungsbereich des Mischerkörpers eine zweite Gruppe mit wenigstens einer zweiten Abgaseintrittsöffnung umfasst. In einem zwischen dem ersten Wandungsbereich und dem zweiten Wandungsbereich liegenden und den Reaktionsmittelaufnahmekanal begrenzenden dritten Wandungsbereich kann beispielsweise eine Mehrzahl von dritten Abgaseintrittsöffnungen vorgesehen sein.

Um dabei die größte Menge des in dem Innenraum des Mischerkörpers eintretenden Abgases über die erste Gruppe und die zweite Gruppe an zwei einander vorzugsweise im Wesentlichen gegenüberliegenden Wandungsbereichen, nämlich dem ersten Wandungsbereich und dem zweiten Wandungsbereich, erreichen zu können, wird vorgeschlagen, dass wenigstens eine, vorzugsweise jede erste Abgaseintrittsöffnung oder/und wenigstens eine, vorzugsweise jede zweite Abgaseintrittsöffnung eine größere Öffnungsquerschnittsfläche aufweist als wenigstens eine, vorzugsweise jede dritte Abgaseintrittsöffnung.

Für eine weiter verbesserte Durchmischung des Abgases mit dem Reaktionsmittel kann vorgesehen sein, dass die Abgaseintrittsöffnungsanordnung in Zuordnung zu wenigstens einem vorzugsweise jedem Abgabekanal wenigstens eine, vorzugsweise eine Mehrzahl von vierten Abgaseintrittsöffnungen aufweist. Vorzugsweise ist dabei vorgesehen, dass die in Zuordnung zu wenigstens einem Abgabekanal vorgesehene wenigstens eine vierte Abgaseintrittsöffnung im Bereich der Abgabekanalöffnung dieses Abgabekanals zu dem Abgabekanal führt.

Um den Mischerkörper mit dem darin vorzusehenden Innenvolumenbereich zur Bereitstellung des Reaktionsmittelaufnahmekanals und des wenigstens einen Abgabekanals in einfacher Weise aufbauen zu können, ist erfindungsgemäß vorgesehen, dass der Mischerkörper ein im Wesentlichen plattenartiges erstes Mischerkörperteil und ein mit den ersten Mischerkörperteil verbundenes, im Wesentlichen plattenartiges zweites Mischerkörperteil umfasst.

Zur Bereitstellung des Innenvolumenbereichs umfasst das erste Mischerkörperteil einen den Reaktionsmittelaufnahmekanal begrenzenden ersten Auswölbungsbereich und beidseits des ersten Auswölbungsbereichs einen mit dem zweiten Mischerkörperteil verbundenen und optional einen Abgabekanal begrenzenden Plattenbereich. Das zweite Mischerkörperteil umfasst einen den Reaktionsmittelaufnahmekanal begrenzenden zweiten Auswölbungsbereich und für jeden Abgabekanal einen diesen begrenzenden dritten Auswölbungsbereich.

Der erste Auswölbungsbereich kann den ersten Wandungsbereich und den zweiten Wandungsbereich bereitstellen, welche einander im Wesentlichen gegenüberliegend angeordnet sein können, und kann den dritten Wandungsbereich bereitstellen, welcher zwischen dem ersten und dem zweiten Wandungsbereich diese verbindend angeordnet ist.

Die Abgaseintrittsöffnungsanordnung kann im ersten Mischerkörperteil vorgesehen sein, welches somit ein im Wesentlichen in Richtung stromaufwärts orientiert zu positionierendes Mischerkörperteil ist. Die Austrittsöffnungsanordnung kann im zweiten Mischerkörperteil vorgesehen sein, welches somit im Wesentlichen in Richtung stromabwärts orientiert in einem Abgasführungskanal zu positionieren ist.

Zur Bereitstellung des Strömungsumlenkbereichs zwischen dem Reaktionsmittelaufnahmekanal und den beiden Abgabekanälen ist im zweiten Mischerkörperteil ein Einwölbungsbereich vorgesehen.

Die vorliegende Erfindung betrifft ferner eine Abgasanlage für eine Brennkraftmaschine, umfassend einen Abgasführungskanal, einen erfindungsgemäß aufgebauten Mischer und eine Reaktionsmitteleinspritzanordnung zum Einspritzen von Reaktionsmittel in den Reaktionsmittelaufnahmekanal des Mischers.

Dabei ist vorzugsweise vorgesehen, dass der Mischer in dem Abgasführungskanal im Wesentlichen die gesamte Strömungsquerschnittsfläche des Abgasführungskanals bedeckt, so dass im Wesentlichen das gesamte den Abgasführungskanal durchströmende Abgas durch die in dem Mischerkörper gebildeten Abgaseintrittsöffnungen, entweder in den Innenraum des Mischerkörpers hinein oder durch den Mischerkörper hindurch strömen muss und im Wesentlichen keine Umströmung des Mischers an dessen Außenumfangsbereich ermöglicht ist.

Der Mischer ist dabei vorzugsweise im Abgasführungskanal derart positioniert, dass der Reaktionsmittelaufnahmekanal oder/und der wenigstens eine Abgabekanal sich im Wesentlichen orthogonal zu einer Abgasströmungsrichtung im Abgasführungskanal erstreckt. Insbesondere bei derartiger Orientierung des Reaktionsmittelaufnahmekanals ist es besonders vorteilhaft, wenn die Reaktionsmitteleinspritzanordnung Reaktionsmittel im Wesentlichen orthogonal zur Abgasströmungsrichtung im Abgasführungskanal einspritzt.

Bei der erfindungsgemäßen Abgasanlage kann stromaufwärts des Mischers eine Dieseloxidationskatalysatoranordnung vorgesehen sein. Stromabwärts des Mischers kann eine Katalysatoranordnung angeordnet sein, vermittels welcher auch unter der Wirkung des dem Abgas beigemischten Reaktionsmittels eine selektive Reduktion durchgeführt wird. Auch eine Partikelfilteranordnung kann stromabwärts des Mischers positioniert sein.

Abhängig von der Einbaulage in ein Fahrzeug kann die erfindungsgemäße Abgasanlage dabei derart aufgebaut sein, dass eine Abgasströmungsrichtung in der Katalysatoranordnung oder/und der Partikelfilteranordnung und eine Abgasströmungsrichtung in der Dieseloxidationskatalysatoranordnung zueinander im Wesentlichen gleich gerichtet sind oder zueinander im Wesentlichen orthogonal sind oder einander im Wesentlichen entgegengesetzt gerichtet sind.

Die vorliegende Erfindung wird nachfolgend mit Bezug auf die beiliegenden Figuren detailliert beschrieben. Es zeigt:
- Fig. 1: eine schematische Längsschnittdarstellung eines Abschnitts eines in einer Abgasanlage gebildeten Abgasführungskanals mit einem Mischer und einer Reaktionsmittel in den Mischer einspritzenden Reaktionsmitteleinspritzanordnung;
- Fig. 2: die Komponenten einer Abgasanlage gemäß Fig. 1 in explosionsartiger Darstellung;
- Fig. 3: eine Seitenansicht des Mischers der Abgasanlage der Fig. 1, betrachtet in Blickrichtung III in Fig. 4;
- Fig. 4: eine Seitenansicht des Mischers der Abgasanlage der Fig. 1, betrachtet in Blickrichtung IV in Fig. 3;
- Fig. 5: eine perspektivische Ansicht eines in einem Abgasführungskanal positionierten Mischers, betrachtet in Blickrichtung V in Fig. 4;
- Fig. 6: eine der Fig. 5 entsprechende Ansicht bei Betrachtung des Mischers in Blickrichtung VI in Fig. 4;
- Fig.7: eine Seitenansicht einer Abgasanlage;
- Fig. 8: eine Draufsicht auf die Abgasanlage der Fig. 7, betrachtet in Blickrichtung VIII in Fig. 7;
- Fig. 9: eine vergrößerte Detailansicht der Abgasanlage der Fig. 7, teilweise aufgeschnitten dargestellt;
- Fig. 10: eine Ansicht des Details der Fig. 9 in Blickrichtung X in Fig. 9;
- Fig. 11: eine Ansicht des Details der Fig. 9 in Blickrichtung XI in Fig. 9;
- Fig. 12: eine der Fig. 7 entsprechende Ansicht einer alternativen Ausgestaltungsart einer Abgasanlage;
- Fig. 13: eine Ansicht der Abgasanlage der Fig. 12 in Blickrichtung XIII in Fig. 12;
- Fig. 14: eine Ansicht der Abgasanlage der Fig. 12 in Blickrichtung XIV in Fig. 12;
- Fig. 15: eine weitere Ansicht der Abgasanlage der Fig. 12 in Blickrichtung XIII in Fig. 12.

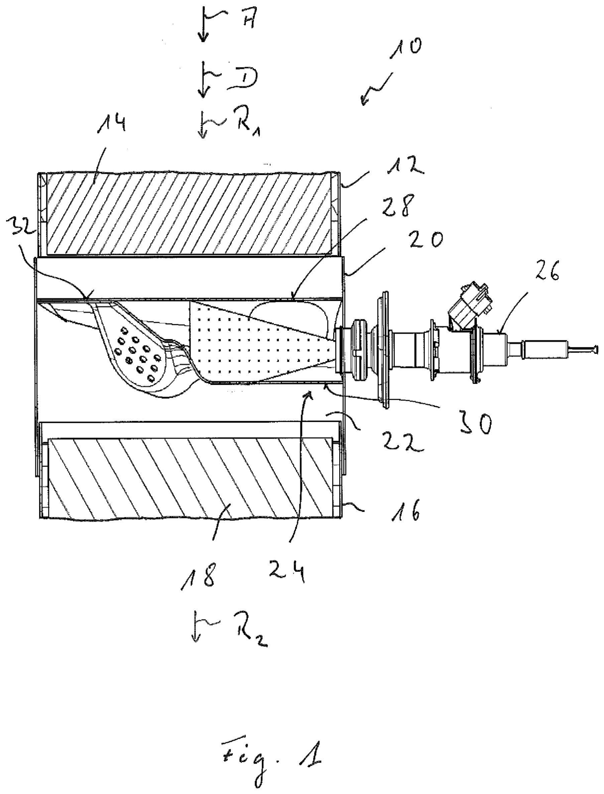

Die Fig. 1 zeigt einen Abschnitt einer allgemein mit 10 bezeichneten Abgasanlage einer Fahrzeugbrennkraftmaschine. In einem stromaufwärtigen Rohrabschnitt 12 der Abgasanlage 10 ist in dem in Fig. 1 dargestellten Ausgestaltungsbeispiel ein nur schematisch dargestellter Dieseloxidationskatalysator 14 angeordnet. In einem stromabwärtigen Rohrabschnitt 16 der Abgasanlage 10 ist eine Katalysatoranordnung 18 zur Durchführung einer selektiven Reduktion angeordnet.

Zwischen den beiden Rohrabschnitten 12, 16 ist ein Rohrabschnitt 20 vorgesehen, in welchem ein Abschnitt eines allgemein mit 22 bezeichneten Abgasführungskanals der Abgasanlage 10 angeordnet ist. Das in der Abgasanlage 10 bzw. im Abgasführungskanal 22 strömende Abgas A strömt im Wesentlichen in der Längsrichtung der Rohrabschnitte 12, 16 und 20 in einer Abgasströmungsrichtung D. Es ist darauf hinzuweisen, dass die Abgasströmungsrichtung die eine Hauptströmungsrichtung des Abgases A im Abgasführungskanal 22 repräsentiert, welcher, hervorgerufen durch Turbulenzen oder nachfolgend beschriebene Strömungsumlenkungen, lokal andere Strömungsrichtungskomponente überlagert sein können.

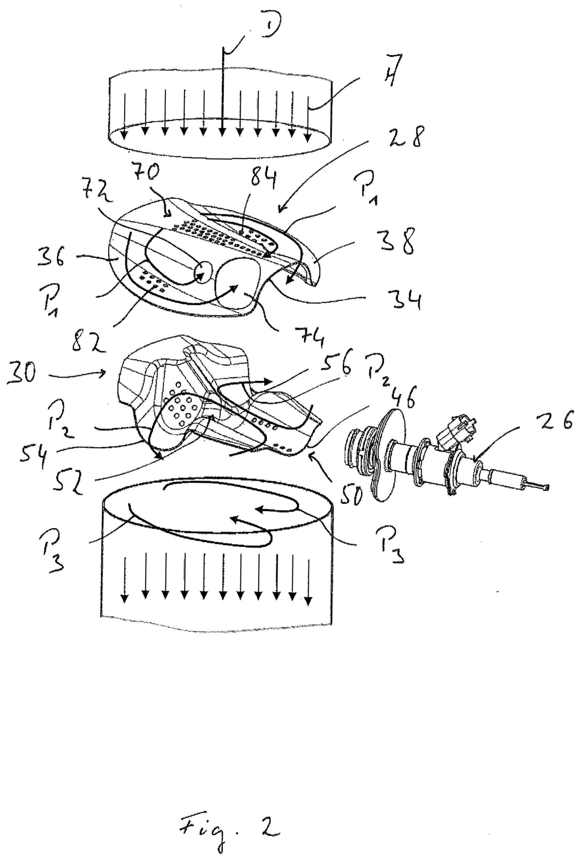

Im Rohrabschnitt 20 der Abgasanlage 10 ist ein allgemein mit 24 bezeichneter und nachfolgend mit Bezug auf die Fig. 2 bis 6 detailliert beschriebener Mischer angeordnet. In Zuordnung zu dem Mischer 24 ist eine allgemein mit 26 bezeichnete Reaktionsmitteleinspritzanordnung, auch als Injektor bezeichnet, vorgesehen, welche beispielsweise an dem Rohrabschnitt 20 festgelegt sein kann und Reaktionsmittel R im Wesentlichen orthogonal zur Abgasströmungsrichtung D abgibt. Das durch die Reaktionsmitteleinspritzanordnung 26 dem Abgas beigemischte Reaktionsmittel R kann beispielsweise eine Harnstoff/Wasser-Lösung sein.

Der Mischer 24 umfasst einen mit zwei plattenartigen Mischerteilen 28, 30 aufgebauten Mischerkörper 32. Die Außenumfangskontur des Mischerkörpers 32 ist an die Querschnittskontur des Abgasführungskanals 22 angepasst, weist also beispielsweise in Anpassung an die Innenquerschnittsgeometrie des Rohrabschnitts 20 eine kreisrunde Geometrie auf. Wie die Fig. 1, 5 und 6 dies zeigen, ist der Mischer 24 im Rohrabschnitt 20 derart positioniert, dass der Mischerkörper 32 im Wesentlichen die gesamte Innenquerschnittsfläche des Rohrabschnitts 20 bedeckt, am Außenumfangsbereich der Mischerkörper 32 vorzugsweise jedoch einen spaltartigen Zwischenraum zur Innenoberfläche des Rohrabschnitts 20 belässt und dort von Abgas umströmbar ist. Beispielsweise kann der Mischerkörper 32 in dem Rohrabschnitt 20 durch Verschweißung festgelegt sein, wozu vorteilhafterweise die beiden beispielsweise ebenfalls durch Verschweißung aneinander festzulegenden Mischerkörperteile 28, 30 als Blechumformteile bereitgestellt sind.

Das im Abgasführungskanal 22 in Richtung stromaufwärts orientiert, also dem Dieseloxidationskatalysator 14 zugewandt orientiert zu positionierende erste Mischerkörperteil 28 weist einen im Wesentlichen über dieses sich hinweg erstreckenden ersten Auswölbungsbereich 34 auf. Beidseits dieses ersten Auswölbungsbereichs 34 sind zwei im Wesentlichen ebene Plattenbereiche 36, 38 vorgesehen. Der erste Auswölbungsbereich 34 ist mit zwei einander im Wesentlichen gegenüberliegenden und aus der durch die Plattenbereiche 36, 38 aufgespannten Ebene heraus führenden ersten und zweiten Wandungsbereichen 40, 42 und einem diese verbindenden dritten Wandungsbereich 44 aufgebaut. Die Höhe der ersten und zweiten Wandungsbereiche 40, 42 und somit auch die Höhe des ersten Auswölbungsbereichs 34 kann über das erste Mischerkörperteil 28 hinweg im Wesentlichen quer zur Abgasströmungsrichtung A variieren.

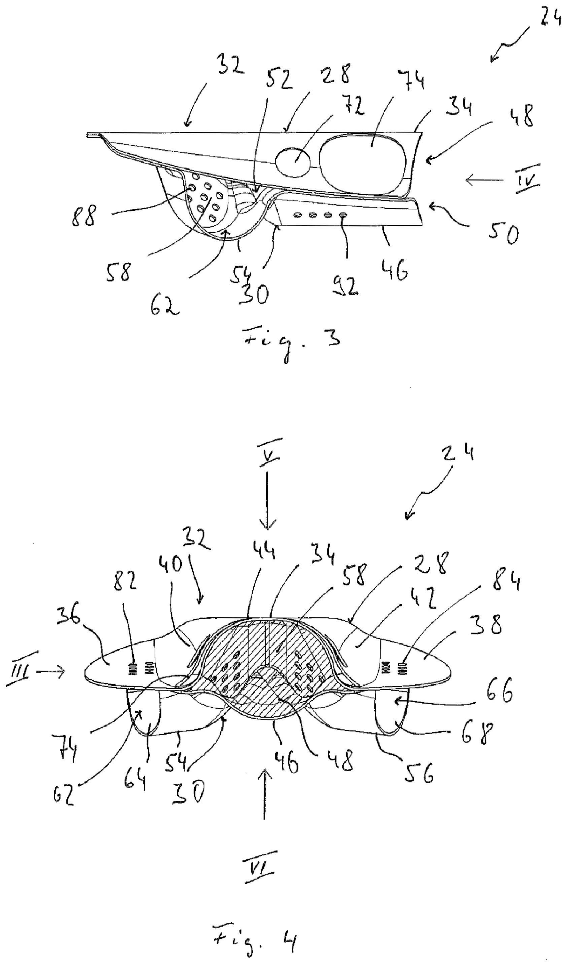

In Zuordnung zu dem ersten Auswölbungsbereich 44 ist im zweiten Mischerkörperteil 28 ein zweiter Auswölbungsbereich 46 vorgesehen. Diese beiden Auswölbungsbereiche 34, 46 umgrenzen zusammen einen Reaktionsmittelaufnahmekanal 48, welcher sich in dem Mischerkörper 32 von einem in der Fig. 3 rechts liegenden Reaktionsmittelaufnahmeendbereich 50 zu einem in der Fig. 3 weiter links liegenden Abgabeendbereich 52 erstreckt.

Im zweiten Mischerkörperteil 30 sind im Wesentlichen quer zum zweiten Auswölbungsbereich 50 orientiert zwei dritte Auswölbungsbereiche 54, 56 vorgesehen. Zwischen den beiden dritten Auswölbungsbereichen 54, 56 ist ein einen Strömungsumlenkbereich 58 bereitstellender Einwölbungsbereich 60 gebildet.

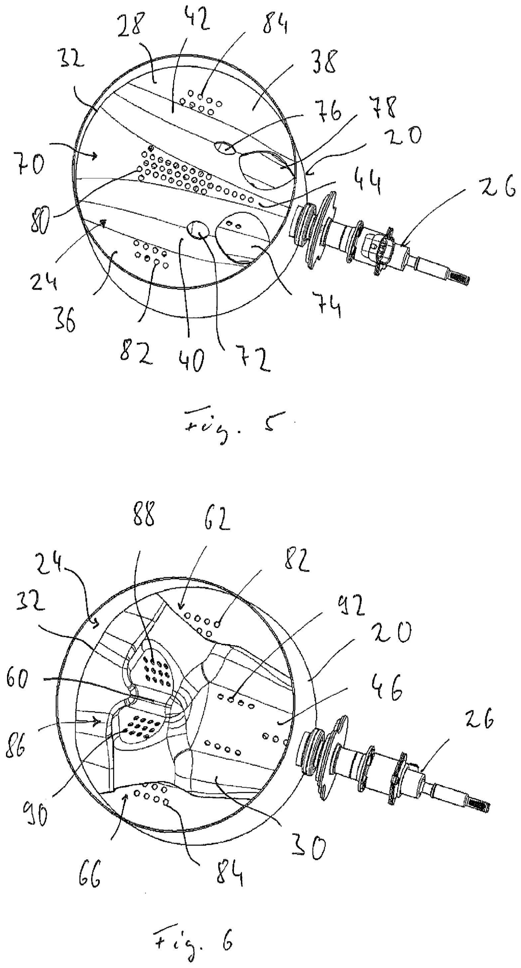

Zwischen dem dritten Auswölbungsbereich 54 des zweiten Mischerkörperteils 30 und dem Plattenbereich 36 des ersten Mischerkörperteils 28 ist ein Abgabekanal 62 begrenzt, der über eine Abgabeöffnung 64 nach außen offen ist. In entsprechender Weise ist zwischen dem dritten Auswölbungsbereich 56 des zweiten Mischerkörperteils 30 und dem Plattenbereich 38 des ersten Mischerkörperteils 28 ein Abgabekanal 66 begrenzt, der über eine Abgabeöffnung 68 nach außen offen ist. Die beiden Abgabekanäle 62, 66 führen also vom Reaktionsmittelaufnahmekanal 48 bzw. dessen Abgabeendbereich 52 im Wesentlichen quer zu einer Längserstreckungsrichtung des Reaktionsmittelaufnahmekanals zwischen dessen Reaktionsmittelaufnahmeendbereich 50 und dessen Abgabeendbereich 52 weg und sind durch den Strömungsumlenkbereich 58 bzw. den diesen bereitstellenden Einwölbungsbereich 60 im Wesentlichen voneinander getrennt. Bei Positionierung des Mischers 24 im Rohrabschnitt 20 in der in Fig. 5 und in Fig. 6 dargestellten Art und Weise erstreckt sich der Reaktionsmittelaufnahmekanal 48 ausgehend von seinem angrenzend an den Rohrabschnitt 20 positionierten Reaktionsmittelaufnahmeendbereich 50 im Wesentlichen orthogonal zur Abgasströmungsrichtung D im Abgasführungskanal 22. Entsprechend erstrecken sich auch die beiden vom Reaktionsmittelaufnahmekanal 48 im Wesentlichen quer und in zueinander entgegengesetzten Richtung weg erstreckenden Abgabekanäle 62, 66 im Wesentlichen orthogonal zur Abgasströmungsrichtung D im Abgasführungskanal 22. Die Reaktionsmitteleinspritzanordnung 26 spritzt das Reaktionsmittel R in Form eines in Fig. 1 angedeuteten Sprühkegels mit einer zur Abgasströmungsrichtung D im Wesentlichen orthogonalen Reaktionsmittelströmungsrichtung in den Reaktionsmittelaufnahmekanal 48 in Richtung auf den Abgabeendbereich 52 zu ein.

Um den Eintritt von auf den Mischer 24 in der Abgasströmungsrichtung D zu strömendem Abgas A in den im Wesentlichen den Reaktionsmittelaufnahmekanal 48 und die beiden Abgabekanäle 54, 56 umfassenden Innenraum des Mischerkörpers 32 zu ermöglichen, ist an dem in Richtung stromaufwärts orientiert vorzusehenden ersten Mischerkörperteil 28 eine allgemein mit 70 bezeichnete Abgaseintrittsöffnungsanordnung ausgebildet. Die Abgaseintrittsöffnungsanordnung 70 umfasst im ersten Wandungsbereich 40 eine erste Gruppe mit zwei ersten Abgaseintrittsöffnungen 72, 74, von welchen beispielsweise die näher am Reaktionsmittelaufnahmeendbereich 50 liegende größere erste Abgaseintrittsöffnung 74 sich bis in den dritten Wandungsbereich 44 hinein erstrecken kann. In dem dem ersten Wandungsbereich 40 im Wesentlichen gegenüberliegenden zweiten Wandungsbereich 42 ist eine zweite Gruppe mit zwei zweiten Abgaseintrittsöffnungen 76, 78 vorgesehen, wobei die Ausgestaltung der zweiten Abgaseintrittsöffnungen 76, 78 im Wesentlichen symmetrisch zur Ausgestaltung der ersten Abgaseintrittsöffnungen 72, 74 sein kann. Auch hier kann sich also die größere zweite Abgaseintrittsöffnung 78 bis in den Bereich des dritten Wandungsbereichs 44 erstrecken.

Die Abgaseintrittsöffnungsanordnung 70 kann ferner im dritten Wandungsbereich 44, also dem den Reaktionsmittelaufnahmekanal 48 im Wesentlichen in Richtung stromaufwärts begrenzenden Wandungsbereich des ersten Auswölbungsbereichs 34, eine Mehrzahl dritter Abgaseintrittsöffnungen 80 umfassen. Diese können sich über die gesamte Länge des Reaktionsmittelaufnahmekanals 48 verteilt erstrecken und weisen im Allgemeinen eine deutlich kleinere Öffnungsquerschnittsfläche auf, als die ersten Abgaseintrittsöffnungen 72, 74 und die zweiten Abgaseintrittsöffnungen 76, 78.

Beidseits des ersten Auswölbungsbereichs 34, also im Wesentlichen in den Plattenbereichen 36, 38, sind in Zuordnung zu den beiden Abgabekanälen 62, 66 bzw. deren Abgabeöffnungen 64, 68 jeweils mehrere vierte Abgaseintrittsöffnungen 82, 84 vorgesehen. Die in Zuordnung zum Abgabekanal 62 vorgesehenen Abgaseintrittsöffnungen 82 liegen im Wesentlichen im Bereich der Abgabeöffnung 64 desselben, können zum Teil noch in dem den Abgabekanal 62 begrenzenden Abschnitt des Plattenbereichs 36 positioniert sein, können zum Teil aber auch außerhalb des Abgabekanals 62 positioniert sein. Entsprechendes gilt für die in Zuordnung zu dem Abgabekanal 66 vorgesehenen vierten Abgaseintrittsöffnungen 84.

Im zweiten Mischerkörperteil 30 ist eine in Fig. 6 deutlich sichtbare Austrittsöffnungsanordnung 86 vorgesehen. Diese umfasst am Einwölbungsbereich 60 jeweils in Zuordnung zum Abgabekanal 62 und in Zuordnung zum Abgabekanal 66 mehrere Austrittsöffnungen 88, 90 und umfasst in dem den Reaktionsmittelaufnahmekanal 48 in Richtung stromabwärts begrenzenden zweiten Auswölbungsbereich 46 Austrittsöffnungen 92.

Das von stromaufwärts in der Abgasströmungsrichtung D auf dem Mischer 24 zu strömende Abgas A kann aufgrund der Einpassung des Mischers 24 in den Rohrabschnitt 20 den Mischerkörper 32 an seinem Außenumfangsbereich umströmen. Gleichwohl wird ein Großteil des zunächst in der Abgasströmungsrichtung D auf den Mischer 24 zu strömenden Abgases A durch die ersten Abgaseintrittsöffnungen 72, 74 und die zweiten Abgaseintrittsöffnungen 76, 78, also im Wesentlichen nahe am Reaktionsmittelaufnahmeendbereich 50 des Reaktionsmittelaufnahmekanals 48 in den Reaktionsmittelaufnahmekanal 48 eintreten. Dazu wird das Abgas A, so wie in Fig. 2 durch Strömungspfeile P₁ angedeutet, umgelenkt. Das in den Reaktionsmittelaufnahmekanal 48 nahe dessen Reaktionsmittelaufnahmeendbereich 50 eintretende Abgas A durchströmt den Reaktionsmittelaufnahmekanal 48 in Richtung vom Reaktionsmittelaufnahmeendbereich 50 auf den Abgabeendbereich 52 bzw. den dort vorgesehenen Strömungsumlenkbereich 58 zu. Dabei nimmt das Abgas A das im Wesentlichen in der gleichen Strömungsrichtung von der Reaktionsmitteleinspritzanordnung 26 in den Reaktionsmittelaufnahmekanal 48 eingespritzte Reaktionsmittel R mit. Am Abgabeendbereich 52 trifft das das Reaktionsmittel R mitführende Abgas A auf den Strömungsumlenkbereich 58 auf und wird, wie durch Strömungspfeile P₂ in Fig. 2 veranschaulicht, in Richtung zu den beiden Abgabekanälen 62, 66 abgelenkt. Das Gemisch aus Abgas A und Reaktionsmittel R tritt an den beiden einander entgegengesetzt orientierten Abgabeöffnungen 64, 68 aus den Abgabekanälen 62, 66 aus und wird, wie durch Strömungspfeile P₃ in Fig. 2 veranschaulicht, zunächst noch weiter verwirbelt, bevor es im Wesentlichen wieder in der Abgasströmungsrichtung A auf die Katalysatoranordnung 18 zu strömt.

Ein Teil des Abgases A tritt über die dritten Abgaseintrittsöffnungen 80 in den Reaktionsmittelaufnahmekanal 48 ein, was zu einer verstärkten Verwirbelung des darin bereits strömenden Gemisches aus Abgas A und Reaktionsmittel R führt. Entsprechend führt auch das über die vierten Abgaseintrittsöffnungen 82, 84 im Bereich der Abgabeöffnungen 64, 68 das erste Mischerkörperteil 28 durchströmende Abgas A zu einer verstärkten Verwirbelung bzw. Strömungsumlenkung des aus den Abgabeöffnungen 64, 68 austretenden Gemisches aus Reaktionsmittel R und Abgas A. Ein Teil dieses Gemisches kann auch durch die Austrittsöffnungen 88, 90 am Strömungsumlenkbereich 58 bzw. die Austrittsöffnungen 92 am zweiten Auswölbungsbereich 46 austreten.

Der in den Figuren dargestellte und vorangehend detailliert beschriebene Mischer 24 kann, ohne von den Prinzipien der vorliegenden Erfindung abzuweichen, in verschiedensten Bereichen variiert werden. So könnten beispielsweise die beiden Plattenbereiche 36, 38 dort, wo sie die Abgabekanäle 62, 66 mit begrenzen, Auswölbungsbereiche aufweisen, um den Strömungsquerschnitt der Abgabekanäle 62, 66 zu vergrößern. Auch könnten die Abgabekanäle 62,66 ausschließlich durch solche Ausformungen des ersten Mischerkörperteils 28 bereitgestellt und durch im Wesentlichen ebene Plattenbereiche des zweiten Mischerkörperteils 30 begrenzt sein. Die Anzahl der Öffnungen der Eintrittsöffnungsanordnung 70 bzw. der Austrittsöffnungsanordnung 86 kann von der in den Figuren dargestellten Anzahl abweichen. Auch könnten beispielsweise im dritten Wandungsbereich 44 keine Eintrittsöffnungen ausgebildet sein. Ebenso könnten im zweiten Auswölbungsbereich 46 keine Austrittsöffnungen vorgesehen sein.

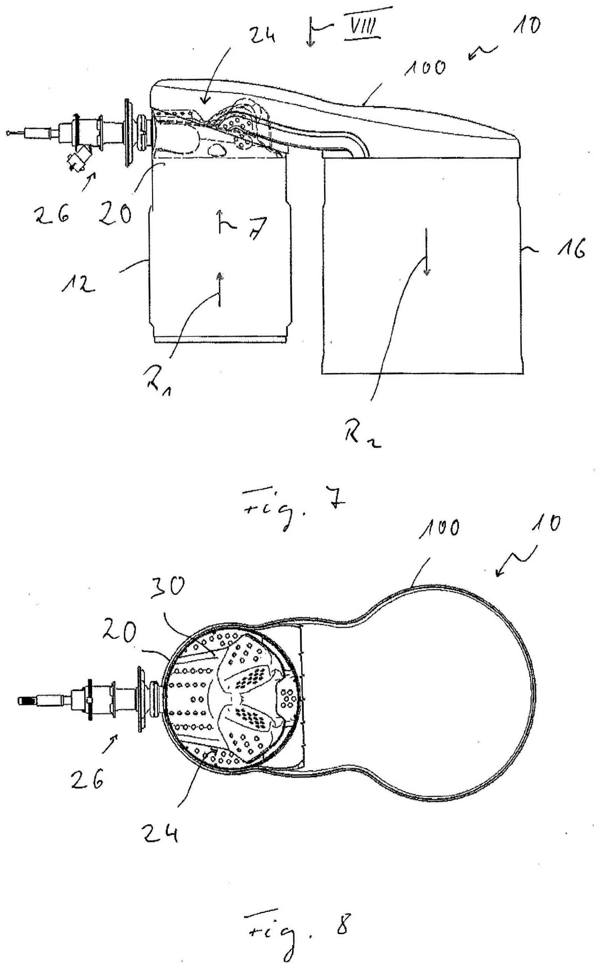

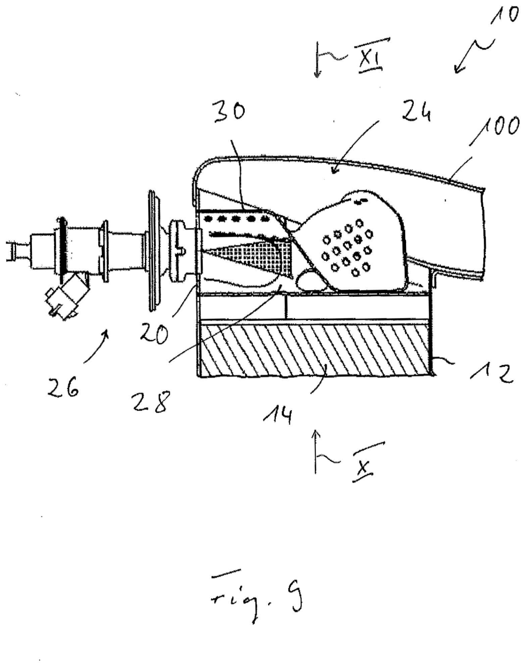

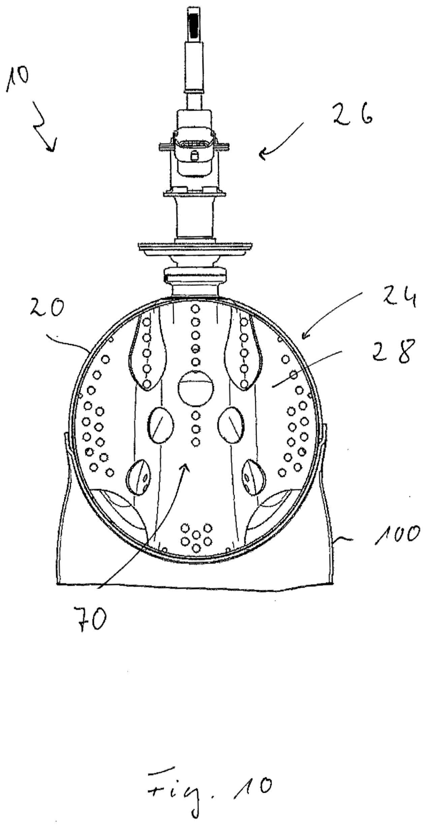

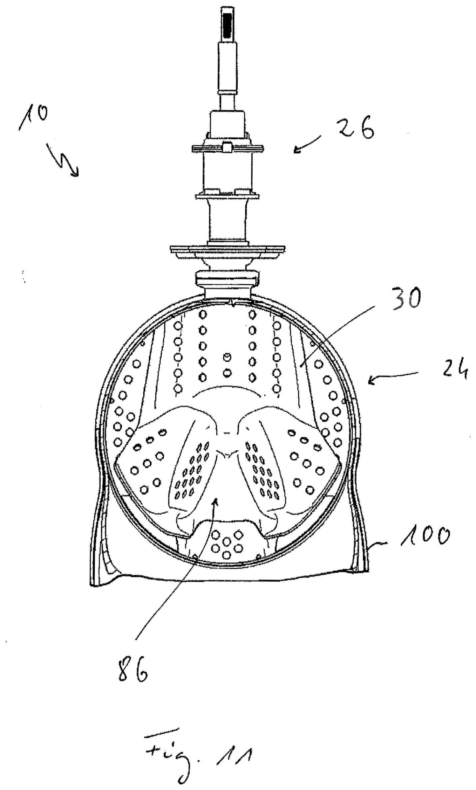

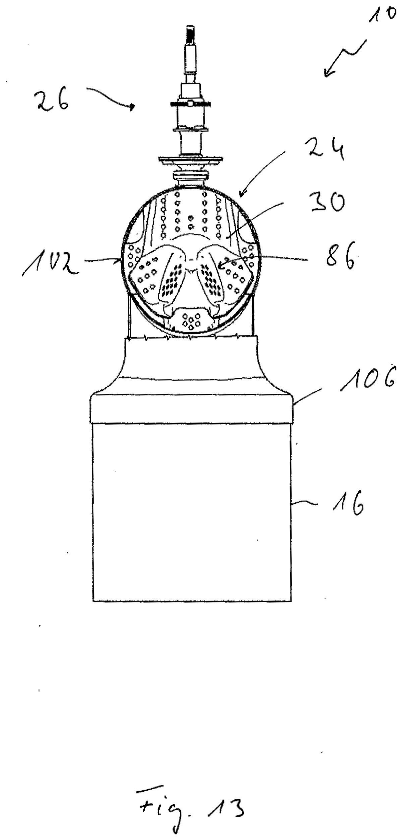

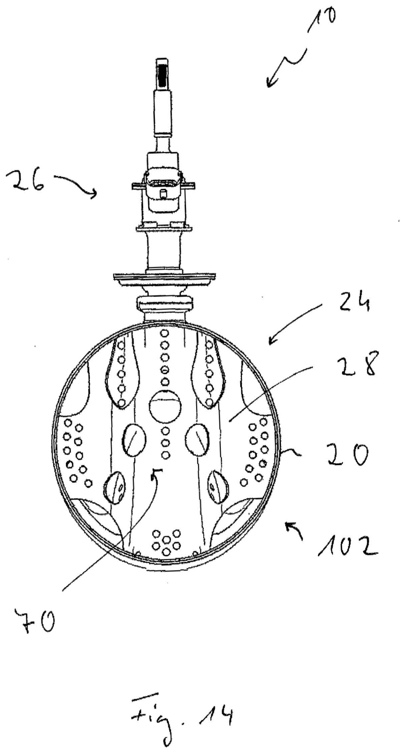

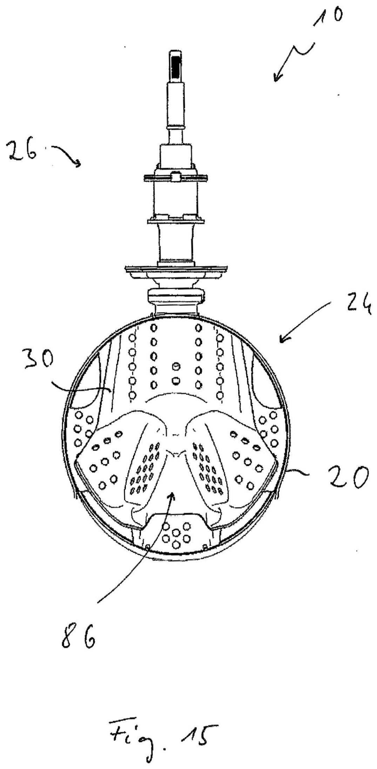

In den Fig. 7-15 sind alternative Ausgestaltungen einer mit einem erfindungsgemäß aufgebauten Mischer 24 ausgebildeten Abgasanlage 10 dargestellt. Während bei der in Fig. 1 dargestellten Ausgestaltung einer Abgasanlage 10 die Abgasströmungsrichtung R₁ stromaufwärts des Mischers 24, also z. B. die im Wesentlichen im Dieseloxidationskatalysator 14 sich einstellende Abgasströmungsrichtung, zu einer stromabwärts des Mischers 24 sich einstellenden Abgasströmungsrichtung R₂ im Wesentlichen gleichgerichtet ist, diese beiden Systembereiche vom Abgas also im Wesentlichen der gleichen Hauptströmungsrichtung durchströmt werden, sind in dem in den Fig. 8-11 dargestellten Ausgestaltungsbeispiel einer Abgasanlage 10 diese beiden Strömungsrichtung in R₁, R₂ zueinander im Wesentlichen entgegengesetzt gerichtet. Zwischen den beiden Rohrabschnitten 12,16 kann ein allgemein mit 100 bezeichnetes Verbindungsgehäuse vorgesehen sein, welches an den den Mischer 24 enthaltenden Rohrabschnitt 20 anschließt oder diesen zumindest teilweise auch bereitstellt. Das den Mischer 24 verlassende Abgas A wird bezüglich der Abgasströmungsrichtung R₁ näherungsweise um 90° umgelenkt, durchströmt das Verbindungsgehäuse und wird beim Eintritt in den Rohrabschnitt 16 erneut um näherungsweise 90° umgelenkt, so dass im Rohrabschnitt 16 die Abgasströmungsrichtung R₂ der Abgasströmungsrichtung R₁ im Rohrabschnitt 12 näherungsweise entgegengesetzt gerichtet ist. Es ergibt sich somit eine im Wesentlichen gefaltete Gesamtstruktur der Abgasanlage 10.

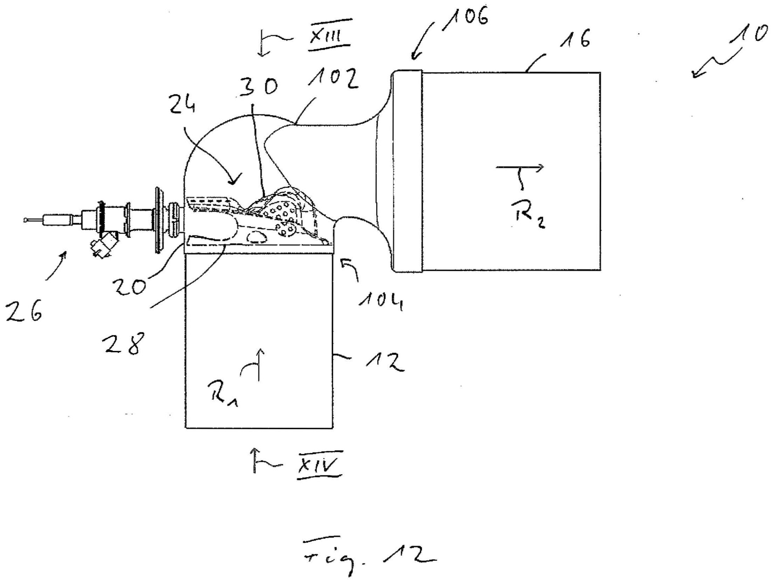

Die Figuren 12-15 zeigen einen Aufbau, bei welchem die Abgasströmungsrichtungen R₁, R₂ stromaufwärts des Mischers 24 und stromaufwärts des Mischers 24 zueinander im Wesentlichen orthogonal stehen. Ein beispielsweise auch den den Mischer 24 enthaltenden Rohrabschnitt 20 bereitstellendes Verbindungsgehäuse 102 weist Anschlussbereiche 104, 106 für die schnitte 12 bzw. 16 auf.

Das den Mischer 24 verlassende Abgas wird im Verbindungsgehäuse 102 bezüglich der Abgasströmungsrichtung R näherungsweise um 90° umgelenkt und tritt in dieser Richtung auch in den Rohrabschnitt 16 ein. Es ergibt sich somit eine im Wesentlichen winkelartige Gesamtstruktur der Abgasanlage 10.

Es ist abschließend darauf hinzuweisen, dass die vorangehend angesprochenen Abgasströmungsrichtungen R₁, R₂ jeweils die in einem angesprochenen Systembereich sich einstellenden Hauptströmungsrichtungen bezeichnen. Dies schließt nicht aus, dass in diesen Systembereichen lokal von diesen Hauptströmungsrichtungen abweichende Strömungsrichtungen auftreten können.

## Patentansprüche

1. Mischer zur Durchmischung von in einem Abgasführungskanal einer Brennkraftmaschine strömendem Abgas (A) mit in den Abgasführungskanal eingespritztem Reaktionsmittel (R), umfassend einen Mischerkörper (32) mit
- einem Reaktionsmittelaufnahmekanal (48) mit einem Reaktionsmittelaufnahmeendbereich (50) und einem Abgabeendbereich (52),
- einer Abgaseintrittsöffnungsanordnung (70) mit einer Mehrzahl von zu dem Reaktionsmittelaufnahmekanal führenden Abgaseintrittsöffnungen (72, 74, 76, 78, 80),
- wenigstens einem von dem Reaktionsmittelaufnahmekanal (48) wegführenden Abgabekanal (62, 66) mit einer Abgabekanalöffnung (64, 68) zur Abgabe eines Reaktionsmittel/Abgas-Gemisches aus dem Mischerkörper (32)
wobei der Mischerkörper (32) ein plattenartiges erstes Mischerkörperteil (28) und ein plattenartiges zweites Mischerkörperteil (30) umfasst,
**dadurch gekennzeichnet,**
**dass** das erste Mischerkörperteil (28) einen den Reaktionsmittelaufnahmekanal (48) begrenzenden ersten Auswölbungsbereich (34) und beidseits des ersten Auswölbungsbereichs (34) einen mit dem zweiten Mischerkörperteil (30) verbundenen Plattenbereich (36, 38) umfasst, und dass das zweite Mischerkörperteil (30) einen den Reaktionsmittelaufnahmekanal (48) begrenzenden zweiten Auswölbungsbereich (46) umfasst,
**dass** von dem Reaktionsmittelaufnahmekanal (48) im Abgabeendbereich (52) zwei Abgabekanäle (62, 66) in im Wesentlichen entgegengesetzten Richtungen wegführen, wobei das zweite Mischerkörperteil (30) für jeden Abgabekanal (62, 66) einen den Abgabekanal (62, 66) begrenzenden dritten Auswölbungsbereich (54, 56) umfasst, und
**dass** im zweiten Mischerkörperteil (30) durch einen Einwölbungsbereich (60) ein im Abgabeendbereich (52) des Reaktionsmittelaufnahmekanals (48) im Wesentlichen zwischen den beiden Abgabekanälen (62, 66) angeordneter Strömungsumlenkbereich (58) bereitgestellt ist zum Umlenken von im Reaktionsmittelaufnahmekanal (48) auf den Abgabeendbereich (52) zu strömendem Reaktionsmittel (R) oder/und Abgas (A) in jeden Abgabekanal (62, 66).

2. Mischer nach Anspruch 1, **dadurch gekennzeichnet, dass** eine Austrittsöffnungsanordnung (86) mit einer Mehrzahl von aus dem Reaktionsmittelaufnahmekanal (48) oder/und dem wenigstens einen Abgabekanal (62, 66) herausführenden Austrittsöffnungen (88, 90, 92) vorgesehen ist.

3. Mischer nach Anspruch 2, **dadurch gekennzeichnet, dass** im Übergangsbereich von dem Reaktionsmittelaufnahmekanal (48) zu einem der Abgabekanäle (62, 66) eine erste Gruppe von Austrittsöffnungen (88) vorgesehen ist und im Übergangsbereich von dem Reaktionsmittelaufnahmekanal (48) zu dem anderen der Abgabekanäle (62, 66) eine zweite Gruppe von Austrittsöffnungen (90) vorgesehen ist.

4. Mischer nach einem der Ansprüche 1-3, **dadurch gekennzeichnet, dass** die Abgaseintrittsöffnungsanordnung (70) in einem den Reaktionsmittelaufnahmekanal (48) begrenzenden ersten Wandungsbereich (40) des Mischerkörpers (32) eine erste Gruppe mit wenigstens einer ersten Abgaseintrittsöffnung (72, 74) und in einem den Reaktionsmittelaufnahmekanal (48) begrenzenden zweiten Wandungsbereich (42) des Mischerkörpers (32) eine zweite Gruppe mit wenigstens einer zweiten Abgaseintrittsöffnung (76, 78) umfasst, wobei vorzugsweise die Abgaseintrittsöffnungsanordnung (70) in einem zwischen dem ersten Wandungsbereich (40) und dem zweiten Wandungsbereich (42) liegenden und den Reaktionsmittelaufnahmekanal (48) begrenzenden dritten Wandungsbereich (44) dritte Abgaseintrittsöffnungen (80) umfasst.

5. Mischer nach Anspruch 4, **dadurch gekennzeichnet, dass** wenigstens eine, vorzugsweise jede erste Abgaseintrittsöffnung (72, 74) oder/und wenigstens eine, vorzugsweise jede zweite Abgaseintrittsöffnung (76, 78) eine größere Öffnungsquerschnittsfläche aufweist als wenigstens eine, vorzugsweise jede dritte Abgaseintrittsöffnung (80).

6. Mischer nach einem der Ansprüche 1-5, **dadurch gekennzeichnet, dass** die Abgaseintrittsöffnungsanordnung (70) in Zuordnung zu wenigstens einem vorzugsweise jedem Abgabekanal (62, 66) wenigstens eine, vorzugsweise eine Mehrzahl von vierten Abgaseintrittsöffnungen (82, 84) aufweist.

7. Mischer nach Anspruch 6, **dadurch gekennzeichnet, dass** die in Zuordnung zu wenigstens einem Abgabekanal (62, 66) vorgesehene wenigstens eine vierte Abgaseintrittsöffnung (82, 84) im Bereich der Abgabekanalöffnung (64, 68) dieses Abgabekanals (62, 66) zu dem Abgabekanal (62, 66) führt.

8. Mischer nach einem der Ansprüche 1-7, **dadurch gekennzeichnet, dass** der Plattenbereich (36, 38) einen Abgabekanal (62, 66) begrenzt.

9. Mischer nach Anspruch 4 und Anspruch 8, **dadurch gekennzeichnet, dass** der erste Auswölbungsbereich (34) den ersten Wandungsbereich (40), den zweiten Wandungsbereich (42) und den dritten Wandungsbereich (44) bereitstellt.

10. Mischer nach einem der Ansprüche 1-9, **dadurch gekennzeichnet, dass** die Abgaseintrittsöffnungsanordnung (70) im ersten Mischerkörperteil (28) vorgesehen ist, oder/und dass die Austrittsöffnungsanordnung (86) im zweiten Mischerkörperteil (30) vorgesehen ist.

11. Abgasanlage für eine Brennkraftmaschine, umfassend einen Abgasführungskanal (22), einen Mischer (24) nach einem der vorangehenden Ansprüche und eine Reaktionsmitteleinspritzanordnung (26) zum Einspritzen von Reaktionsmittel (R) in den Reaktionsmittelaufnahmekanal (48) des Mischers (24).

12. Abgasanlage nach Anspruch 11, **dadurch gekennzeichnet, dass** der Mischer (24) in dem Abgasführungskanal (22) im Wesentlichen die gesamte Strömungsquerschnittfläche des Abgasführungskanals (22) bedeckt, oder/und dass der Reaktionsmittelaufnahmekanal (48) oder/und der wenigstens eine Abgabekanal (62, 66) sich im Wesentlichen orthogonal zu einer Abgasströmungsrichtung (D) im Abgasführungskanal (22) erstreckt, oder/und dass die Reaktionsmitteleinspritzanordnung (26) Reaktionsmittel (R) im Wesentlichen orthogonal zu der Abgasströmungsrichtung (D) im Abgasführungskanal (22) einspritzt.

13. Abgasanlage nach Anspruch 11 oder 12, **dadurch gekennzeichnet, dass** stromaufwärts des Mischers (24) eine Dieseloxidationskatalysatoranordnung (14) vorgesehen, oder/und dass stromabwärts des Mischers (24) eine Katalysatoranordnung (18) zur selektiven Reduktion oder/und eine Partikelfilteranordnung vorgesehen ist.

14. Abgasanlage nach Anspruch 13, **dadurch gekennzeichnet, dass** eine Abgasströmungsrichtung (R₂) in der Katalysatoranordnung (18) oder/und der Partikelfilteranordnung und eine Abgasströmungsrichtung (R₁) in der Dieseloxidationskatalysatoranordnung (14) zueinander im Wesentlichen gleich gerichtet sind oder zueinander im Wesentlichen orthogonal sind oder einander im Wesentlichen entgegengesetzt gerichtet sind.

## Claims

1. Mixer for mixing exhaust gas (A) flowing in an exhaust gas-carrying duct of an internal combustion engine with reactant (R) injected into the exhaust gas-carrying duct, comprising a mixer body (32) with
- a reactant receiving duct (48) having a reactant receiving end area (50) and a release end area (52),
- an exhaust gas inlet opening arrangement (70) with a plurality of exhaust gas inlet openings (72,
74, 76, 78, 80) leading to the reactant receiving duct,
- at least one release duct (62, 66) leading away from the reactant receiving duct (48) with a release duct opening (64, 68) for the release of a reactant/exhaust gas mixture from the mixer body (32),
wherein the mixer body (32) comprises an essentially plate-like first mixer body part (28) and an essentially plate-like second mixer body part (30), **characterized in**
**that** the first mixer body part (28) comprises a first bulge area (34) defining the reactant receiving duct (48) and a plate area (36, 38) connected to the second mixer body part (30) on both sides of the first bulge area (34), and that the second mixer body part (30) comprises a second bulge area (46) defining the reactant receiving duct (48),
**that** two release ducts (62, 66) lead away from the reactant receiving duct (48) in the release end area (52) in essentially opposite directions, the second mixer body part comprising for each release duct (62, 66) a third bulge area (54, 56) defining the release duct (62, 66) and
**that** a flow deflection area (58) positioned in the release end area (52) of the reactant receiving duct (48) substantially between the two release ducts (62, 66) is provided in the second mixer body part (30) by means of an overarching area (60) for deflecting reactant (R) or/and exhaust gas (A) flowing in the reactant receiving duct (48) towards the release end area (52) into each release duct (62, 66).

2. Mixer in accordance with one claim 1, **characterized in that** an outlet opening arrangement (86) is provided with a plurality of outlet openings (88, 90, 92) leading out of the reactant receiving duct (48) or/and the at least one release duct (62, 66).

3. Mixer in accordance with claim 2, **characterized in that** a first group of outlet openings (88) is provided in the transition area from the reactant receiving duct (48) to one of the release ducts (62, 66) and a second group of outlet openings (90) is provided in the transition area from the reactant receiving duct (48) to the other of the release ducts (62, 66).

4. Mixer in accordance with one of the claims 1-3, **characterized in that** the exhaust gas inlet opening arrangement (70) comprises a first group with at least one first exhaust gas inlet opening (72, 74) in a first wall area (40) of the mixer body (32) defining the reactant receiving duct (48) and a second group with at least one second exhaust gas inlet opening (76, 78) in a second wall area (42) of the mixer body (32) defining the reactant receiving duct (48), the exhaust gas inlet opening arrangement (70) preferably comprising third exhaust gas inlet openings (80) in a third wall area (44) lying between the first wall area (40) and the second wall area (42) and defining the reactant receiving duct (48).

5. Mixer in accordance with claim 4, **characterized in that** at least one, preferably each first exhaust gas inlet opening (72, 74) or/and at least one, preferably each second exhaust gas inlet opening (76, 78) has a larger opening cross-sectional area than at least one, preferably each third exhaust gas inlet opening (80).

6. Mixer in accordance with one of the claims 1-5, **characterized in that** the exhaust gas inlet opening arrangement (70) has at least one, preferably a plurality of fourth exhaust gas inlet openings (82, 84) in association with at least one, preferably each release duct (62, 66).

7. Mixer in accordance with claim 6, **characterized in that** the at least one fourth exhaust gas inlet opening (82, 84) provided in association with at least one release duct (62, 66) in the area of the release duct opening (62, 68) of this release duct (62, 66) leads to the release duct (62, 66).

8. Mixer in accordance with one of claims 1-7, **characterized in that** the plate area (36, 38) (36, 38) defines a release duct (62, 66).

9. Mixer in accordance with claim 4 and claim 8, **characterized in that** the first bulge area (34) provides the first wall area (40), the second wall area (42) and the third wall area (44).

10. Mixer in accordance with one of the claims 1-9, **characterized in that** the exhaust gas inlet opening arrangement (70) is provided in the first mixer body part (28), or/and that the outlet opening arrangement (86) is provided in the second mixer body part (30).

11. Exhaust system for an internal combustion engine, comprising an exhaust gas-carrying duct (22), a mixer (24) in accordance with one of the above claims and a reactant injection unit (26) for injecting reactant (R) into the reactant receiving duct (48) of the mixer (24).

12. Exhaust system in accordance with claim 11, **characterized in that** the mixer (24) covers essentially the entire flow cross-sectional area of the exhaust gas-carrying duct (22) in the exhaust gas-carrying duct (22), or/and that the reactant receiving duct (48) or/and the at least one release duct (62, 66) extends essentially at right angles to an exhaust gas flow direction (D) in the exhaust gas-carrying duct (22), or/and that the reactant injection unit (26) injects reactant (R) essentially at right angles to the exhaust gas flow direction (D) in the exhaust gas-carrying duct (22).

13. Exhaust system in accordance with claim 11 or 12, **characterized in that** a diesel oxidation catalytic converter (14) is provided upstream of the mixer (24), or/and that a catalytic converter (18) or/and a particle filter system is provided downstream of the mixer (24) for selective reduction.

14. Exhaust system in accordance with claim 13, **characterized in that** an exhaust gas flow direction (R2) in the catalytic converter (18) or/and in the particle filter system and an exhaust gas flow direction (R1) in the diesel oxidation catalytic converter (14) are directed essentially in the same direction towards one another or are essentially at right angles to one another or are directed essentially opposite one another.

## Revendications

1. Mélangeur pour mélanger le gaz d'échappement (A) s'écoulant dans un canal de transport de gaz d'échappement d'un moteur à combustion interne avec du réactif (R) injecté dans le canal de transport de gaz d'échappement, comprenant un corps de mélangeur (32) avec
- un canal de réception de réactif (48) comprennant une région d'extrémité de réception de réactif (50) et une région d'extrémité de distribution (52),
- un arrangement d'orifice d'entrée de gaz d'échappement (70) avec une pluralité d'orifices d'entrée de gaz d'échappement (72, 74, 76, 78, 80) menant au canal de réception de réactif,
- au moins un canal de distribution (62, 66) s'éloignant du canal de réception de réactif (48) avec un orifice de canal d'évacuation (64, 68) pour évacuer un mélange réactif/gaz d'échappement du corps de mélangeur (32) le corps de mélangeur (32) comprenant une première part de corps de mélangeur (28) en forme de plaque et une deuxième part de corps de mélangeur (30) en forme de plaque,
**caractérisé en ce**
**que** la première part de corps de mélangeur (28) comprend une première région de convexité (34) délimitant le canal de réception de réactif (48) et des deux côtés de la première region de convexité (34) une région de plaque (36, 38) liée à la deuxième part de corps de mélangeur (30), et en ce que la deuxième part de corps de mélangeur (30) comprend une deuxième région de convexité (46) délimitant le canal de réception de réactif (48),
**que** deux canaux de distribution (62, 66) s'éloignent du canal de réception de réactif (48) dans la région d'extrémité de distribution (52) dans des sens essentiellement opposes, la deuxième part de corps de mélangeur (30) comprennant pour chaque canal de distribution (62, 66) une troisième région de convexité (54, 56) délimitant ledit canal de distribution (62, 66), et
**qu'**une region de déviation d'écoulement (58) positionné dans la région d'extrémité de distribution (52) du canal de réception de réactif (48) essentiellemnet entre les deux canaux de distribution (62, 66) est prévue dans la deuxième part de corps de mélangeur (30) par une région de concavité (60) pour dévier du réactif (R) ou/et du gaz d'échappement (A) s'écoulant dans le canal de réception de réactif (48) vers la région d'extrémité de distribution (52) dans chaque canal de distribution (62, 66).

2. Mélangeur selon la revendication 1, **caractérisé en ce qu'**un arrangement d'orifice de sortie (86) est prévu avec une pluralité d'orifices de sortie (88, 90, 92) orientés hors du canal de réception de réactif (48) ou/et dudit au moins un canal de distribution (62, 66).

3. Mélangeur selon la revendication 2, **caractérisé en ce que** dans la région de transition du canal de réception de réactif (48) à un des canaux de distribution (62, 66) un premier groupe d'orifices de sortie (88) est prévu et que dans la région de transition du canal de réception de réactif (48) à l'autre des canaux de distribution (62, 66) un deuxième groupe d'orifices de sortie (90) est prévu.

4. Mélangeur selon une des revendications 1-3, **caractérisé en ce que** l'arrangement d'orifice d'entrée de gaz d'échappement (70) comprend dans une première région de paroi (40) du corps de mélangeur (32) délimitant le canal de réception de réactif (48) un premier groupe avec au moins un premier orifice d'entrée de gaz d'échappement (72, 74) et dans une deuxième région de paroi (42) du corps de mélangeur (32) délimitant le canal de réception de réactif (48) un deuxième groupe avec au moins un deuxième orifice d'entrée de gaz d'échappement (76, 78), où de préférence l'arrangement d'orifice d'entrée de gaz d'échappement (70) comprend dans une troisième région de paroi (44) située entre la première région de paroi (40) et la deuxième région de paroi (42) et délimitant le canal de réception de réactif (48) des troisième orifices d'entrée de gaz d'échappement (80).

5. Mélangeur selon la revendication 4, **caractérisé en ce qu'**au moins un, de préférence chaque premier orifice d'entrée de gaz d'échappement (72, 74) ou/et au moins un, de préférence chaque deuxième orifice d'entrée de gaz d'échappement (76, 78) comprend une plus grande section transversale d'orifice qu'au moins un, de préférence chaque troisième orifice d'entrée de gaz d'échappement (80).

6. Mélangeur selon une des revendications 1-5, **caractérisé en ce que** l'arrangement d'orifice d'entrée de gaz d'échappement (70) comprend en association à au moins un, de préférence chaque canal de distribution (62, 66) au moins un, de préférence une pluralité de quatrièmes orifice d'entrée de gaz d'échappement (82, 84).

7. Mélangeur selon la revendication 6, **caractérisé en ce que** ledit au moins un quatrième orifice d'entrée de gaz d'échappement (82, 84) prévu en association à au moins un canal de distribution (62, 66) mène dans la région de l'orifice de canal d'évacuation (64, 68) de ce canal de distribution (62, 66) au canal de distribution (62, 66).

8. Mélangeur selon une des revendications 1-7, **caractérisé en ce que** la région en forme de plaque (36, 38) délimite un canal de distribution (62, 66).

9. Mélangeur selon la revendication 4 et la revendication 8, **caractérisé en ce que** la première region de convexité (34) prévoit la première région de paroi (40), la deuxième région de paroi (42) et la troisième région de paroi (44).

10. Mélangeur selon une des revendications 1-9, **caractérisé en ce que** l'arrangement d'orifice d'entrée de gaz d'échappement (70) est prévu dans la première part de corps de mélangeur (28), ou/et que l'arrangement d'orifice de sortie (86) est prévu dans la deuxième part de corps de mélangeur (30).

11. Système d'échappement pour un moteur à combustion interne, comprenant un canal de transport de gaz d'échappement (22), un mélangeur (24) selon une des revendications précédentes et un arrangement d'injection de réactif (26) pour injecter du réactif (R) dans le canal de réception de réactif (48) du mélangeur (24).

12. Système d'échappement selon la revendication 11, **caractérisé en ce que** le mélangeur (24) recouvre dans le canal de transport de gaz d'échappement (22) essentiellement la section transversale d'écoulement entière du canal de transport de gaz d'échappement (22)ou/et **en ce que** le canal de reception de réactif (48) ou/et ledit au moins un canal de distribution (62, 66) s'étend essentiellement de manière orthogonale à un sens d'écoulement du gaz d'échappement (D) dans le canal de transport de gaz d'échappement (22), ou/et **en ce que** l'arrangement d'injection de réactif (26) injecte du réactif (R) essentiellement de manière orthogonale au sens d'écoulement du gaz d'échappement (D) dans le canal de transport de gaz d'échappement (22).

13. Système de gaz d'échappement selon la revendication 11 ou 12, **caractérisé en ce qu'**en amont du mélangeur (24) un arrangement catalyseur diesel à oxydation (14) est prévu, ou/et **en ce qu'**en aval du mélangeur (24) un arrangement catalyseur (18) pour la réduction sélective ou/et un arrangement de filtre particulaire est prévu.

14. Système de gaz d'échappement selon la revendication 13, **caractérisé en ce qu'**un sens d'écoulement de gaz d'échappement (R2) dans l'arrangement catalyseur (18) ou/et l'arrangement de filtre particulaire et un sens d'écoulement de gaz d'échappement (R1) dans l'arrangement catalyseur diesel à oxidation (14) sont essentiellement orientés dans le même sens ou sont essentiellement orthogonaux ou sont essentiellement opposes.
